Europäisches Patentamt

**(19)** European Patent Office

Office européen des brevets

**(11)** **EP 0 642 433 B1**

**(12)** # FASCICULE DE BREVET EUROPEEN

**(45)** Date de publication et mention
de la délivrance du brevet:
**04.09.1996 Bulletin 1996/36**

**(21)** Numéro de dépôt: **93913062.1**

**(22)** Date de dépôt: **25.05.1993**

**(51)** Int. Cl.⁶: **B60T 8/48**, B60T 8/42

**(86)** Numéro de dépôt international:
**PCT/FR93/00502**

**(87)** Numéro de publication internationale:
**WO 93/24351 (09.12.1993 Gazette 1993/29)**

**(54) DISPOSITIF DE FREINAGE A DISTRIBUTEUR UNIQUE POUR ANTIBLOCAGE ET ANTIPATINAGE**

BREMSVORRICHTUNG MIT EINEM EINZIGEN STEUERVENTIL FÜR BLOKIERSCHUTZ-UND ANTRIEBSSCHLUPFREGELUNG

BRAKING DEVICE WITH SINGLE DISTRIBUTOR FOR ANTILOCK AND DRIVE SLIP CONTROL

**(84)** Etats contractants désignés:
**DE ES FR GB IT**

**(30)** Priorité: **26.05.1992 FR 9206397**

**(43)** Date de publication de la demande:
**15.03.1995 Bulletin 1995/11**

**(73)** Titulaire: **ALLIEDSIGNAL EUROPE SERVICES TECHNIQUES**
**93700 Drancy (FR)**

**(72)** Inventeur: **KERVAGORET, Gilbert M.**
**F-95100 Argenteuil (FR)**

**(74)** Mandataire: **Bentz, Jean-Paul**
**AlliedSignal Europe Services Techniques S.A.**
**Division Technique**
**126 Rue de Stalingrad**
**93700 Drancy (FR)**

**(56)** Documents cités:
**EP-A- 0 403 291          GB-A- 2 244 314**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Rank Xerox (UK) Business Services
2.13.4/3.4

## Description

La présente invention concerne un dispositif de freinage hydraulique, susceptible d'être actionné directement ou de façon automatique, et comprenant au moins :

- un maître-cylindre qui est rempli d'un liquide de freinage qu'il peut dispenser sur une sortie, et qui est susceptible d'être commandé par une pédale de frein pour constituer une première source de haute pression hydraulique,

- une pompe présentant une entrée aspirante et une sortie refoulante, cette pompe étant susceptible d'être commandée automatiquement pour constituer une seconde source de haute pression hydraulique,

- un premier récepteur de pression propre à utiliser une haute pression pour provoquer le freinage d'une roue motrice,

- un second récepteur de pression propre à utiliser une haute pression pour provoquer le freinage d'une roue non motrice,

- un circuit hydraulique formé d'un réseau de liaisons comprenant au moins une liaison à basse pression et des liaisons raccordant les sorties des sources de haute pression aux récepteurs,

- des première et seconde électrovalves installées sur le circuit hydraulique et respectivement associées aux premier et second récepteurs, chacune d'elles étant susceptible d'être commandée pour raccorder sélectivement le récepteur correspondant à la basse pression ou à une source de haute pression, et

- un distributeur également installé sur le circuit hydraulique pour modifier le réseau de liaisons en fonction de consignes reçues par ce distributeur, ce distributeur comprenant un corps percé d'un alésage et un tiroir susceptible de se déplacer dans l'alésage suivant une direction axiale entre deux positions extrêmes sous le contrôle de la pression d'au moins une source de haute pression, pour relier sélectivement la sortie du maître-cylindre et l'entrée de la pompe.

Des dispositifs de ce type sont bien connus et sont notamment utilisés dans des systèmes de freinage permettant d'éviter un blocage des roues en cas de freinage énergique sur un revêtement d'adhérence trop faible et un patinage des roues motrices en cas d'accélération trop brutale pour entraîner le véhicule.

En particulier, un dispositif du type précité est décrit dans le document GB-A-2 244 314.

Un problème qui se pose en permanence dans la conception de tels systèmes est celui qui consiste à éviter que la complexité relative des fonctions mises en oeuvre ne s'accompagne d'une complexité comparable des moyens utilisés pour assurer ces fonctions.

Dans ce contexte, le but de la présente invention est de proposer un dispositif de freinage à distributeur dans lequel ce dernier, bien que de conception simple et de coût modeste, puisse remplir une pluralité de fonctions.

A cette fin, le dispositif de l'invention est essentiellement caractérisé en ce que le tiroir est susceptible de se déplacer dans l'alésage entre une position neutre et chacune des deux positions extrêmes situées de part et d'autre de la position neutre, le tiroir se déplaçant vers les première et seconde positions extrêmes, à l'encontre de première et seconde forces élastiques respectives, sous l'effet d'une augmentation de pression dans des première et seconde chambres respectives du distributeur, reliées aux sorties respectives des première et seconde sources de pression, en ce que le tiroir, en première position extrême, interrompt une liaison, établie pour les autres positions du tiroir, entre la sortie du maître-cylindre et l'entrée de la pompe et en ce que le tiroir, en seconde position extrême interrompt une liaison, établie pour les autres positions du tiroir, entre la sortie du maître-cylindre et le premier récepteur.

Selon un mode de réalisation avantageux, la seconde chambre est pour partie formée par un alésage du tiroir, dans lequel coulisse un piston sollicité vers l'extérieur de l'alésage par la pression qui règne dans ce dernier, et vers l'intérieur par la première force, ce piston ouvrant, après une course prédéterminée vers l'extérieur depuis la position neutre, un conduit percé dans le tiroir et mettant en communication les première et seconde chambres, ce dont il résulte une limitation de la pression de sortie de la pompe.

Il est par ailleurs commode de prévoir que le tiroir, en première position extrême, établisse une liaison directe, interrompue pour les autres positions du tiroir, entre la sortie de la pompe et le second récepteur.

Cette liaison directe est de préférence établie par recouvrement d'une première gorge annulaire formant une extension radiale de l'alésage et d'une seconde gorge annulaire creusée dans le tiroir, et la première gorge peut servir à relier en permanence la sortie de la pompe à la seconde chambre.

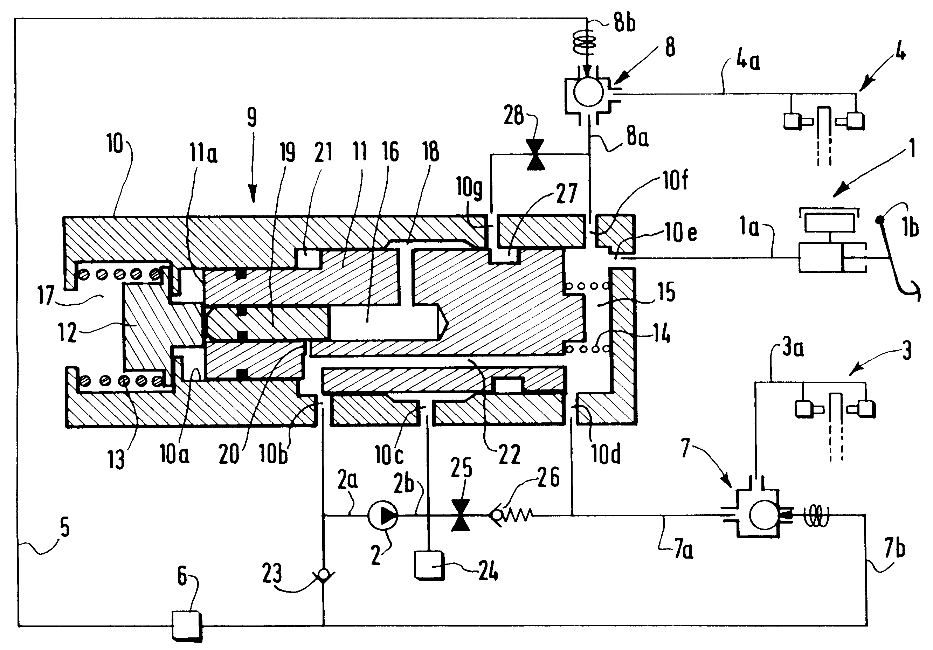

D'autres caractéristiques et avantages de l'invention ressortiront clairement de la description qui en est faite ci-après, à titre indicatif et nullement limitatif, en référence à la figure unique qui représente de façon schématique un dispositif conforme à l'invention.

Le dispositif, dans le mode de réalisation illustré, est présumé constituer l'une des diagonales d'un système de freinage en X dans lequel chaque roue avant de chaque côté du véhicule est freinée en même temps que la roue arrière de l'autre côté.

Ce dispositif comprend d'abord un maître-cylindre 1 rempli d'un liquide de freinage dont la pression, sur une sortie la de ce maître-cylindre peut être portée à une valeur élevée par actionnement d'une pédale 1b, ce maître cylindre constituant donc une première source de haute pression hydraulique.

Une pompe 2, présentant une entrée 2a pour l'aspiration et une sortie 2b pour le refoulement, constitue une seconde source de haute pression. Cette pompe est susceptible d'être commandée, de façon automatique, par un signal externe élaboré par un calculateur ayant détecté une situation de blocage ou de patinage, selon des techniques connues de l'homme de l'art et étrangères à la présente invention.

Ce dispositif comprend par ailleurs un premier récepteur 3 comportant au moins un actionneur de frein et propre à utiliser une haute pression reçue sur son entrée 3a pour provoquer le freinage d'une roue motrice.

Un second récepteur 4, semblable au premier et alimenté par' son entrée 4a, est prévu pour assurer le freinage d'une roue non motrice.

Un circuit hydraulique, composé de liaisons schématiquement représentées par de simples lignes et comprenant notamment une liaison 5 à basse pression, sur laquelle est branchée une réserve tampon à basse pression 6, interconnecte les éléments déjà décrits et ceux dont la description est donnée ci-après.

Des première et seconde électrovalves 7 et 8, respectivement associées aux premier et second récepteurs 3 et 4, sont installées sur le circuit hydraulique, chacune d'elles étant susceptible d'être commandée, de façon connue en soi, pour raccorder sélectivement le récepteur correspondant à l'une des sources de haute pression 1, 2, à travers une entrée telle que 7a, 8a, ou à la liaison à basse pression 5, à travers une sortie telle que 7b, 8b, afin de pouvoir réguler les efforts de freinage exercés par les récepteurs 3 et 4.

Enfin le dispositif de l'invention comprend un distributeur 9, également installé sur le circuit hydraulique, destiné à modifier le réseau de liaisons de ce circuit en fonction de consignes, et dans lequel se concentre une proportion importante des caractéristiques de l'invention, les autres composants illustrés sur la figure pouvant être facilement mentionnés au cours de la description de ce distributeur.

Ce dernier comprend essentiellement un corps 10 percé d'un alésage axial 10a dans lequel coulisse un tiroir 11 susceptible d'adopter une position neutre, telle qu'illustrée, une première position extrême (sur la gauche), et une seconde position extrême (sur la droite).

La position du tiroir est en fait notamment déterminée par une première force élastique exercée, à travers une pièce d'appui 12, par un premier ressort 13 prenant appui sur le corps 10, par une seconde force élastique exercée par un second ressort 14 prenant également appui sur le corps, par la pression dans une première chambre 15 et par la pression dans une seconde chambre 16, le tiroir adoptant sa position neutre lorsque les pressions dans les chambres 15 et 16 sont nulles ou insuffisantes pour vaincre les forces élastiques antagonistes.

Les ressorts 13 et 14 sont précontraints, le premier ressort 13 étant plus puissant que le second et logé dans une chambre 17 à la pression atmosphérique, tandis que le second ressort 14 est logé dans la première chambre 15.

La seconde chambre 16 prend la forme d'un alésage axial percé dans le tiroir 11, ouvrant sur une première gorge annulaire 18 formant une extension radiale de l'alésage 10a.

Cette chambre 16 est par ailleurs fermée axialement par un piston 19 qui y coulisse de façon étanche et qui s'appuie, comme la face axiale 11a du tiroir 11, contre la pièce d'appui 12.

Pour une course de longueur A du piston 19 dans la chambre 16 à partir de la position neutre de repos illustrée sur la figure, ce piston 19 découvre un petit orifice 20 permettant de mettre la chambre 16 en communication avec une chambre annulaire 21 formée entre un épaulement du corps 10 et un épaulement du tiroir 11, cette chambre annulaire 21 étant elle-même en permanence en communication avec la première chambre 15 à travers un canal 22 percé axialement dans le tiroir.

La chambre annulaire 21 communique, sauf pour la première position du tiroir résultant d'un actionnement du maître-cylindre, avec l'entrée 2a de la pompe 2 à travers un orifice 10b du corps 10 du distributeur.

Un clapet anti-retour 23, relié à l'orifice 10b et à l'entrée 2a de la pompe, empêche la perte de pression par fuite de liquide vers la réserve tampon 6 tout en autorisant le prélèvement de liquide de cette réserve par la pompe 2.

La sortie 2b de la pompe est reliée d'une part à la chambre annulaire 18 à travers un orifice 10c du corps du distributeur, d'autre part à une chambre à haute pression 24, et enfin à l'entrée 7a de l'électrovalve 7 à travers un restricteur 25 et un clapet anti-retour taré 26 empêchant la perte de pression dans le récepteur 3 par fuite de liquide vers la gorge 18, ce qui retarderait le retour du distributeur vers sa position neutre en fin de phase de patinage.

Un orifice 10d percé dans le corps 10 du distributeur fait communiquer la première chambre 15, sauf pour la seconde position du tiroir 11, avec la sortie du clapet 26 et l'entrée 7a de l'électrovalve 7.

La première chambre 15 communique par ailleurs en permanence avec la sortie la du maître-cylindre 1 à travers un orifice 10e et avec l'entrée 8a de l'électrovalve 8 à travers un orifice 10f.

Enfin, le tiroir 11 du distributeur 9 présente une gorge annulaire 27 propre à mettre en communication, dans la première position du tiroir 11, la gorge 18 dans laquelle débouche la seconde chambre 16, avec l'entrée 8a de l'électrovalve 8 à travers un orifice 10g du corps du distributeur et un restricteur 28.

Le fonctionnement du dispositif peut maintenant être décrit en référence aux deux états que prend ce dernier, respectivement en cas de freinage commandé directement par le conducteur avec activation possible d'une fonction automatique d'antiblocage, et en cas de freinage automatique, non commandé par le conducteur et déclenché par la détection d'un patinage des roues motrices.

Cas de freinage commandé, avec antiblocage automatique.

Le processus est déclenché par action du conducteur sur la pédale de frein 1b.

La mise sous pression de la première chambre 15 permet l'alimentation des récepteurs 3 et 4 en liquide sous pression.

La pression dans la chambre 15 déplace le tiroir 11 vers sa première position (vers la gauche sur la figure), ce qui a pour effet d'obturer l'orifice 10b, donc d'isoler l'entrée 2a de la pompe 2 par rapport au maître-cylindre 1 et de mettre la sortie 2b de la pompe 2 en communication avec le récepteur 4 de roue non motrice, à travers la gorge 18 du corps 10, la gorge 27 du tiroir 11, le restricteur 28 et l'électrovalve 8.

La sortie 2b de la pompe 2 est également reliée au récepteur 3 de roue motrice à travers le restricteur 25, le clapet 26 et l'électrovalve 7.

Dans ces conditions, si X désigne la compression initiale, en longueur, du premier ressort 13 dans la position neutre (figure), A la course du piston 19 dans l'alésage 16 pour découvrir l'orifice 20, B la course du tiroir 11 vers la gauche depuis la position neutre, K1 la raideur du ressort et S la section du piston 19, la pompe 2 se met à débiter dans le maître-cylindre 1 à travers le canal 22 et la sortie la dès que la pression en sortie de la pompe atteint la valeur donnée par $K1 . (X + A + B) / S$.

Il est donc possible, en fixant cette valeur à la valeur maximale de la pression susceptible d'être produite par le maître-cylindre 1, soit 180 bars environ, de limiter de cette manière la valeur maximale de la pression produite par la pompe 2.

La mise en oeuvre de la fonction antiblocage, réalisée par commande automatique de la pompe 2 et des électrovalves 7 et 8 ne sera pas décrite dans la mesure où elle est bien connue de l'homme de l'art et où elle est étrangère aux caractéristiques spécifiques de l'invention.

Cas d'un freinage automatique déclenché par un patinage.

A nouveau, la détection d'un patinage, c'est-à-dire d'un emballement des roues motrices, se situe en dehors de la présente invention, est bien connue de l'homme de l'art et ne requiert donc aucune description. Une telle détection provoque, de façon automatique, la mise en marche de la pompe 2 dont les effets, dans le cadre de l'invention, sont les suivants :

L'entrée 2a de la pompe 2 est en communication, à travers le canal 22, avec la sortie la du maître-cylindre.

Ce dernier, qui n'est normalement pas sollicité par le conducteur en phase d'accélération, fournit du liquide à la pompe 2.

La pression sur la sortie 2b de la pompe s'élève dès la mise en marche de celle-ci en raison de l'existence du restricteur 25 et du clapet taré 26.

Cette pression s'installe dans la seconde chambre 16 et sa valeur est déterminée pour faire translater le tiroir 11, à l'encontre du second ressort 14, vers sa butée droite qu'il rencontre après une course de longueur C.

Ce déplacement a pour effet d'obturer l'orifice 10d, donc d'isoler le maître-cylindre 1 du récepteur 3 de roue motrice.

Dans ces conditions, l'électrovalve 7 est commandée automatiquement pour moduler l'effort de freinage exercé par le récepteur 3, selon des techniques par exemple connues de l'homme de l'art.

Le récepteur 4 de roue non motrice restant à la pression du maître-cylindre 1, il n'y a pas lieu d'exciter, comme il est coutume de le faire, l'électrovalve 8 avec le risque de réduire sa durée de vie de façon considérable si elle est excitée pendant toute la durée du processus d'antipatinage.

Les fuites relativement faibles du tiroir 11 sont restituées au maître-cylindre 1.

Pendant tout le cycle d'antipatinage, le conducteur garde la possibilité de reprendre le contrôle du freinage en actionnant la pédale 1b. Bien qu'un petit seuil de pression pour faire basculer le tiroir 11 puisse apparaître, le freinage d'urgence peut aisément être assuré.

Dès que l'effort de pression sur la section du piston 19 atteint la valeur donnée par $(Y + A - C) . K2$ où Y est la compression initiale, en longueur, du second ressort 14 dans la position neutre et K2 la raideur de ce ressort, le piston 19 libère l'ouverture 20 qui ouvre la seconde chambre 16 sur le maître-cylindre 1 à travers le canal 22, et la pression à la sortie de la pompe se trouve limitée à la pression maximale à l'intérieur du récepteur 3, soit par exemple au voisinage de 120 bars.

Le limiteur de pression ainsi réalisé présente une stabilité et un niveau de bruit bien plus satisfaisants que ceux auxquels conduit l'utilisation classique d'un clapet de surpression à bille.

En fin de séquence d'antipatinage la pompe 2 est arrêtée de façon automatique et la seconde chambre 16, de volume restreint, se vidange dans les chambres 15 et 21 sous l'action des ressorts 13 et 14 et grâce aux jeux existant entre le tiroir 11 et le corps 10 du distributeur.

Le tiroir 11 découvre très rapidement l'orifice 10d, ce qui rétablit la liaison entre le maître-cylindre 1 et le récepteur 3 de roue motrice, l'ensemble retournant donc très rapidement à la position de repos illustrée sur la figure.

## Revendications

1. Dispositif de freinage hydraulique, susceptible d'être actionné directement ou de façon automatique, et comprenant au moins :

   - un maître-cylindre (1) qui est rempli d'un liquide de freinage qu'il peut dispenser sur une sortie (1a), et qui est susceptible d'être commandé par une pédale de frein (1b) pour constituer une première source de haute pression hydraulique,

   - une pompe (2) présentant une entrée aspirante (2a) et une sortie refoulante (2b), cette pompe étant susceptible d'être commandée automatiquement pour constituer une seconde source de haute pression hydraulique,

   - un premier récepteur de pression (3) propre à utiliser une haute pression pour provoquer le freinage d'une roue motrice,

   - un second récepteur de pression (4) propre à utiliser une haute pression pour provoquer le freinage d'une roue non motrice,

   - un circuit hydraulique formé d'un réseau de liaisons comprenant au moins une liaison à basse pression (5) et des liaisons raccordant les sorties des sources de haute pression aux récepteurs,

   - des première et seconde électrovalves (7, 8) installées sur le circuit hydraulique et respectivement associées aux premier et second récepteurs, chacune d'elles étant susceptible d'être commandée pour raccorder sélectivement le récepteur correspondant à la basse pression ou à une source de haute pression, et

   - un distributeur (9) également installé sur le circuit hydraulique pour modifier le réseau de liaisons en fonction de consignes reçues par ce distributeur, ce distributeur (9) comprenant un corps (10) percé d'un alésage (10a) et un tiroir (11) susceptible de se déplacer dans l'alésage suivant une direction axiale entre deux positions extrêmes sous le contrôle de la pression d'au moins une source de haute pression, pour relier sélectivement la sortie (1a) du maître-cylindre et l'entrée (2a) de la pompe,

   caractérisé en ce que le tiroir (11) est susceptible de se déplacer dans l'alésage entre une position neutre et chacune des deux positions extrêmes situées de part et d'autre de la position neutre, le tiroir se déplaçant vers les première et seconde positions extrêmes, à l'encontre de première et seconde forces élastiques respectives, sous l'effet d'une augmentation de pression dans des première et seconde chambres respectives (15, 16) du distributeur, reliées aux sorties respectives (1a, 2b) des première et seconde sources de pression (1, 2), en ce que le tiroir (11), en première position extrême, interrompt une liaison, établie pour les autres positions du tiroir, entre la sortie (1a) du maître-cylindre et l'entrée (2a) de la pompe, et en ce que le tiroir (11), en seconde position extrême, interrompt une liaison, établie pour les autres positions du tiroir, entre la sortie (1a) du maître-cylindre et le premier récepteur (3).

2. Dispositif suivant la revendication 1, dans lequel la première force est de nature élastique, caractérisé en ce que la seconde chambre (16) est pour partie formée par un alésage du tiroir, dans lequel coulisse un piston (19) sollicité vers l'extérieur de l'alésage par la pression qui règne dans ce dernier, et vers l'intérieur par la première force, ce piston ouvrant, après une course prédéterminée vers l'extérieur depuis la position neutre, un conduit (20, 22) percé dans le tiroir et mettant en communication les première et seconde chambres, ce dont il résulte une limitation de la pression de sortie de la pompe.

3. Dispositif suivant la revendication 1, caractérisé en ce que le tiroir (11), en première position extrême, établit une liaison directe, interrompue pour les autres positions du tiroir entre la sortie (2b) de la pompe et le second récepteur (4).

4. Dispositif suivant la revendication 3, caractérisé en ce que ladite liaison directe est établie par recouvrement d'une première gorge annulaire (18) formant une extension radiale de l'alésage et d'une seconde gorge annulaire (27) creusée dans le tiroir.

5. Dispositif suivant la revendication 4, caractérisé en ce que la première gorge (18) relie en permanence la sortie (2b) de la pompe à la seconde chambre (16).

## Claims

1. Hydraulic brake device, capable of being actuated directly or automatically, and comprising at least:

   - a master cylinder (1) which is filled with a brake fluid which it can dispense on an outlet (1a), and which is capable of being controlled by a brake pedal (lb) so as to constitute a first source of high hydraulic pressure,
   - a pump (2) having a suction inlet (2a) and a force outlet (2b), this pump being capable of being controlled automatically so as to constitute a second source of high hydraulic pressure,

- a first pressure receiver (3) adapted to use a high pressure so as to bring about the braking of a driving wheel,
- a second pressure receiver (4) adapted to use a high pressure so as to bring about the braking of a non-driving wheel,
- a hydraulic system formed of a network of links comprising at least one low pressure link (5) and links connecting the outlets of the sources of high pressure to the receivers,
- first and second electrovalves (7, 8) installed on the hydraulic system and associated with the first and second receivers respectively, each of them being capable of being controlled so as to connect the corresponding receiver selectively to the low pressure or to a source of high pressure, and
- a distributor (9) also installed on the hydraulic system so as to modify the network of links in accordance with instructions received by this distributor, this distributor (9) comprising a body (10) pierced with a bore (10a) and a slide valve (11) capable of moving in the bore in an axial direction between two extreme positions under the control of the pressure of at least one source of high pressure, so as selectively to connect the outlet (1a) of the master cylinder and the inlet (2a) of the pump,

characterized in that the slide valve (11) is capable of moving in the bore between a neutral position and each of the two extreme positions located on either side of the neutral position, the slide valve moving towards the first and second extreme positions, against respective first and second resilient forces, under the effect of a pressure rise in respective first and second chambers (15, 16) of the distributor, connected to the respective outlets (1a, 2b) of the first and second pressure sources (1, 2), in that the slide valve (11), in the first extreme position, interrupts a link, established for the other positions of the slide valve, between the outlet (1a) of the master cylinder and the inlet (2a) of the pump and in that the slide valve (11), in the second extreme position, interrupts a link, established for the other positions of the slide valve, between the outlet (1a) of the master cylinder and the first receiver (3).

2. Device according to Claim 1, in which the first force is of a resilient nature, characterized in that the second chamber (16) is partly formed by a bore of the slide valve, in which slides a piston (19) pushed towards the outside of the bore by the pressure prevailing in the latter, and towards the inside by the first force, this piston opening, after a predetermined outward travel from the neutral position, a duct (20, 22) pierced in the slide valve and placing the first and second chambers in communication, which results in a limitation of the output pressure of the pump.

3. Device according to Claim 1, characterized in that the slide valve (11), in the first extreme position, establishes a direct link, interrupted for the other positions of the slide valve between the outlet (2b) of the pump and the second receiver (4).

4. Device according to Claim 3, characterized in that said direct link is established by overlapping of a first annular groove (18) forming a radial extension of the bore and of a second annular groove (27) hollowed out in the slide valve.

5. Device according to Claim 4, characterized in that the first groove (18) connects the outlet (2b) of the pump permanently to the second chamber (16).

**Patentansprüche**

1. Hydraulische Bremsvorrichtung, welche direkt oder automatisch betätigt werden kann und wenigstens enthält:

- einen Hauptzylinder (1), der mit einer Bremsflüssigkeit gefüllt ist, welche er an einem Ausgang (1a) abgeben kann, und der von einem Bremspedal (1b) gesteuert werden kann, um eine erste Hydraulik-Hochdruckquelle zu bilden;

- eine Pumpe (2) mit einem Ansaugeingang (2a) und einem Förderausgang (2b), wobei diese Pumpe automatisch gesteuert werden kann, um eine zweite Hydraulik-Hochdruckquelle zu bilden;

- einen ersten Druckaufnehmer (3), welcher einen hohen Druck verwenden kann, um die Bremsung eines angetriebenen Rades hervorzurufen;

- einen zweiten Druckaufnehmer (4), der einen hohen Druck verwenden kann, um das Bremsen eines nicht angetriebenen Rades hervorzurufen;

- einen Hydraulikkreis, der durch ein Verbindungsnetz mit wenigstens einer Niederdruckverbindung (5) sowie Verbindungen gebildet ist, welche die Ausgänge der Hochdruckquellen mit den Aufnehmern verbinden;

- ein erstes und ein zweites Elektroventil (7, 8), die in dem Hydraulikkreis angebracht sind und dem ersten bzw. dem zweiten Aufnehmer zugeordnet sind, wobei jedes von ihnen gesteuert werden kann, um den entsprechenden Aufnehmer selektiv mit dem niedrigen Druck oder einer Hochdruckquelle zu verbinden, und

- einen Verteiler (9), der ebenfalls in dem Hydraulikkreis angebracht ist, um das Verbindungsnetz in Abhängigkeit von Vorgaben zu modifizieren, die von diesem Verteiler empfangen werden, wobei dieser Verteiler (9) einen von einer Bohrung (10a) durchbrochenen Körper (10) und einen Schieber (11) enthält, der sich vom Druck von wenigstens einer Hochdruckquelle gesteuert in der Bohrung entlang einer axialen Richtung zwischen zwei Endstellungen verstellen kann, um den Ausgang (1a) des Hauptzylinders und den Eingang (2a) der Pumpe selektiv miteinander zu verbinden;

dadurch gekennzeichnet, daß sich der Schieber (11) in der Bohrung zwischen einer neutralen Stellung und jeder der beiden Endstellungen verstellen kann, die auf der einen und auf der anderen Seite der neutralen Stellung liegen, wobei sich der Schieber entgegen einer ersten bzw. einer zweiten elastischen Kraft zur ersten bzw. zur zweiten Endstellung unter der Wirkung einer Druckerhöhung in der ersten bzw. der zweiten Kammer (15, 16) des Verteilers verstellt, welche mit den entsprechenden Ausgängen (1a, 2b) der ersten und der zweiten Druckquelle (1, 2) verbunden sind, daß der Schieber (11) in der ersten Endstellung eine für die anderen Stellungen des Schiebers ausgebildete Verbindung zwischen dem Ausgang (1a) des Hauptzylinders und dem Eingang (2a) der Pumpe unterbricht und daß der Schieber (11) in der zweiten Endstellung eine für die anderen Stellungen des Schiebers ausgebildete Verbindung zwischen dem Ausgang (1a) des Hauptzylinders und dem ersten Aufnehmer (3) unterbricht.

2. Vorrichtung nach Anspruch 1, bei der die erste Kraft von elastischer Art ist, dadurch gekennzeichnet, daß die zweite Kammer (16) zum Teil durch eine Bohrung des Schiebers gebildet ist, in welcher ein Kolben (19) gleitet, der von dem in der Bohrung herrschenden Druck aus dieser heraus und durch die erste Kraft nach innen beaufschlagt ist, wobei dieser Kolben nach einem vorbestimmten Weg aus der neutralen Stellung nach innen eine Leitung (20, 22) öffnet, die in dem Schieber ausgebildet ist und die erste und die zweite Kammer miteinander verbindet, woraus sich eine Begrenzung des Ausgangsdrucks der Pumpe ergibt.

3. Vorrichtung nach Anspruch 1, dadurch gekennzeichnet, daß der Schieber (11) in der ersten Endstellung eine für die anderen Stellungen des Schiebers unterbrochen direkte Verbindung zwischen dem Ausgang (2b) der Pumpe und dem zweiten Aufnehmer (4) ausbildet.

4. Vorrichtung nach Anspruch 3, dadurch gekennzeichnet, daß die direkte Verbindung durch Überlappung einer ersten ringförmigen Nut (18), welche einen radialen Fortsatz der Bohrung bildet, mit einer zweiten ringförmigen Nut (27) ausgebildet wird, welche vertieft in dem Schieber ausgebildet ist.

5. Vorrichtung nach Anspruch 4, dadurch gekennzeichnet, daß die erste Nut (18) den Ausgang (2b) der Pumpe permanent mit der zweiten Kammer (16) verbindet.